(19) Europäisches Patentamt
European Patent Office
Office européen des brevets

(11) **EP 1 883 167 B1**

(12) **EUROPEAN PATENT SPECIFICATION**

(45) Date of publication and mention
of the grant of the patent:
**09.03.2011 Bulletin 2011/10**

(51) Int Cl.:
***H04W 52/04*** *(2009.01)*

(21) Application number: **07113181.7**

(22) Date of filing: **26.07.2007**

(54) **A system and method for power control, and a remote radio unit**

System und Verfahren zur Leistungssteuerung und Fernfunkeinheit

Système, et procédé de contrôle d'alimentation, et unité de radio à distance

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.07.2006 CN 200610061839**

(43) Date of publication of application:
**30.01.2008 Bulletin 2008/05**

(73) Proprietor: **Huawei Technologies Co., Ltd.
Longgang District, Shenzhen
Guangdong 518129 (CN)**

(72) Inventors:
• **Zhu, Weidong
Huawei Administration Bldg.
518129, Shenzhen
Guangdong 51829 (CN)**

• **Yao, Jianzhong
Huawei Administration Bldg.
518129, Shenzhen
Guandong 518129 (CN)**

(74) Representative: **Sachseder, Matthias et al
Huawei Technologies
European Research Center
Riesstraße 25
80992 München (DE)**

(56) References cited:
**EP-A- 1 361 674      WO-A-03/075484**

EP 1 883 167 B1

## Description

The application claims the priority of Chinese patent application No. 200610061839.1, filed with the State Intellectual Property Office on July 26, 2006, entitled "A System and Method for Adjusting Power of Remote Radio Unit, and a Remote Radio Unit" .

## Field of the Invention

The invention relates to radio power adjustment techniques, and in particular, to a system and method for adjusting power of a remote radio unit, as well as a remote radio unit.

## Background of the Invention

Cell coverage is an important concept in the field of wireless communications. The concepts related with cell coverage include the following.

Sector is a spatial and physical area, and represents the geographical range covered by an antenna.

Cell is a logic concept, and is divided in the view of capacity and service. In a cell, all the users share the radio resources (e.g., code resources, frequency resources, etc.) of the cell.

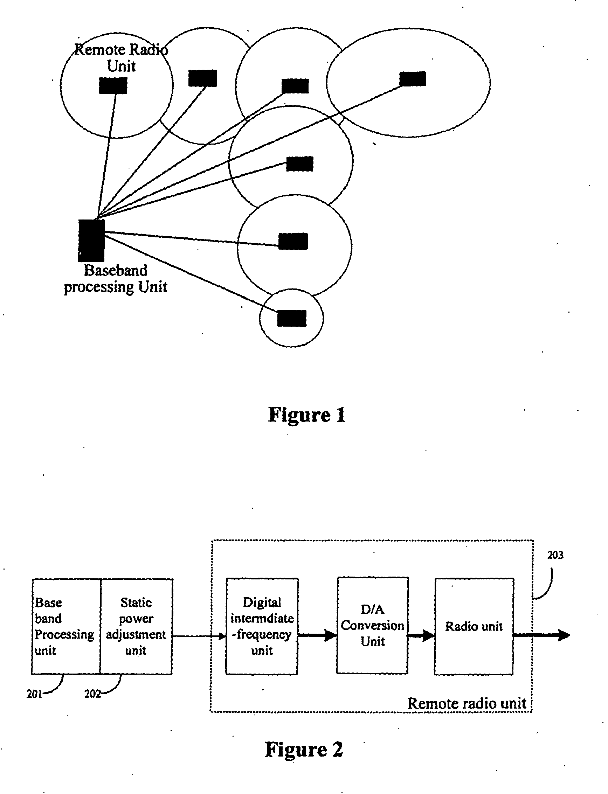

In a common macro cell coverage system, a cell typically belongs to a certain sector from the view of geographical range. Different cells in a sector are differentiated by frequency. However, in a scenario with special coverage requirements, such as indoor coverage, village coverage along a highway, and the like, a plurality of sectors are required for coverage in order to improve the communication quality. The case that a plurality of sectors share one logic cell is referred to as sector split. Figure 1 shows a method of sector split, i.e., Baseband processing Unit (BBU) + Remote Radio Unit (RRU). In Figure 1, "■" " represents a remote radio unit, "■" " represents a baseband processing unit, "○" represents the range covered by a certain remote radio unit, and "_____" represents a connection between the baseband processing unit and a remote radio unit.

The attenuation of a radio signal is associated with the transmission path of the radio signal. In the same propagation environment, the ranges covered by the remote radio units are different, the transmission powers required by the remote radio units are accordingly different. In other words, different remote radio units in a cell may require different transmission powers. Accordingly, the power control should be performed in different manners for the different remote radio units. In the prior art, the power of a remote radio unit in a cell is controlled using a parameter referred to as static power level. The static power level of cell level is computed by a formula as follows:

$$\text{Static power level} = \text{maximum transmission power required by a cell}$$

$$- \text{power capability of remote radio unit}$$

The maximum transmission power required by a cell is determined by the environment of the cell. The power capability of each remote radio unit is fixed in the process of designing, and can not be changed arbitrarily. The types of power capability of the remote radio units are limited, and the differences among the power capabilities of the remote radio units are small. In fact, the power capabilities of the remote radio units are usually the same.

Figure 2 shows an implementation according to the prior art: a static power adjustment unit 202, adapted for adjusting baseband output power according to the static power level, is arranged on a baseband processing unit 201. In Figure 2, the broken line block represents a remote radio unit 203. Each remote radio unit receives the same baseband power obtained from the adjustment of the static power adjustment unit 202. A remote radio unit 203 includes a digital intermediate-frequency unit adapted for shaping, filtering, and digitally up-converting a downlink spread spectrum signal, a digital/analog (A/D) conversion unit adapted for converting the digital signal to an analog signal, and a radio unit adapted for up-converting the analog signal to a transmission frequency band and for filtering the up-converted analog signal and amplifying the power of the up-converted analog signal, so that the remote radio unit 203 may transmit the signal according to received power.

Thus, when there are a plurality of remote radio units in a cell, the unified power adjustment at only the baseband processing unit can not meet the different requirements for transmission power of the remote radio units. For instance, if there are 10 remote radio units in a cell, each of the remote radio units has a power capacity of 200mW (23dBm)and the maximum transmission power required by the cell is 100mW (20dBm), it can be derived from the above formula that the static power level of the cell is -3dB. In this case, if 5 remote radio units are required to have an output power of 100mW, and the rest 5 remote radio units are required to have an output power of 30mW, these requirements can not be satisfied by using only the static power level of cell level in the prior art.

WO 03/075488 A1 discloses a power control device and method for controlling the transmission power of a transmitter of a mobile communication network in which burst signals are output to the transmitter. The burst signals includes a fixed training sequence. The device and method are arranged to control the output power of a power amplifier of the transmitter using a power control loop. The device and method are adapted to detect the output power of the power amplifier only when the latter outputs the training sequence, and to control the power based on the detected output power.

In summary, in the prior art, baseband output power is adjusted at only the baseband processing unit. Accordingly, all the remote radio units have to transmit signals at a same power level, the transmission powers of the remote radio units can not be adjusted differently. This has a limitation on the practical networking applications.

## Summary of the Invention

Embodiments of the invention provide a system and a method for power control of a remote radio unit, as well as a remote radio unit, so that different remote radio units can have different output powers in a sector split environment.

According to an aspect of the invention, a System for controlling power of at least one remote radio unit. The system includes a baseband processing unit (401, 501) and at least one remote radio unit (402, 504, 605). The system further includes at least one first static power adjustment unit (403, 503. 601). The base band processing unit (401. 501) is adapted for processing a baseband signal and outputting the processed baseband signal to the first static power adjustment unit (403, 503, 601), the first static power adjustment unit (403, 503, 601) is adapted for controlling power of the baseband signal output from the baseband processing unit according to static power level of the remote radio unit, the remote radio unit (402, 504, 605) is adapted for receiving the baseband signal processed by the first static power adjustment unit, performing intermediate-frequency processing to the baseband signals and transmiting the resulting signal. The static power level of the remote radio unit is a difference between transmission power required for the remote radio unit and power capability of the remote radio unit.

In the system for power control, the power of remote radio units may be adjusted by the static power adjustment unit arranged at the side of the remote radio units. In this way, output powers of different remote radio units can be adjusted differently.

According to another aspect of the invention, a remote radio unit is provided, which includes:

a digital intermediate-frequency unit;

a digital/analog conversion unit;

a radio unit;

the remote radio unit further includes a static power adjustment unit, adapted for power control according to a static power level of the remote radio unit, and for transmitting the adjusted baseband signal to the digital intermediate-frequency unit.

The static power level of the remote radio unit is a difference between transmission power required for the remote radio unit and power capability of the remote radio unit.

As can be seen, a remote radio unit may cooperate with a static power adjustment unit arranged at the side of the remote radio unit so as to adjust the output power of the remote radio unit. In this way, the output powers of different remote radio units can be adjusted differently.

According to another aspect of the invention, a method for power control is provided, which includes:

obtaining a static power level of a remote radio unit:

controlling output power of a baseband processing unit according to the static power level of the remote radio unit, so that transmission power of the remote radio unit is controlled.

The static Power level of the remote radio unit is a difference between transmission power required for the remote radio unit and power capability of die remote radio unit.

As can be seen, remote radio units can adjust power by using the static power levels of the remote radio units. In this way, output powers of different remote radio units can be adjusted differently without any additional hardware cost. In addition, because the power adjustment is implemented on the remote radio units by using digital processing techniques, a wider dynamic range and an improved adjustment precision, as well as a wider application scenario, may be achieved.

**Brief Description of the Drawings**

Figure 1 is a schematic diagram illustrating sector split;
Figure 2 is a schematic diagram illustrating a system in the prior art;
Figure 3 is a flow chart illustrating a method according to an embodiment of the invention;
Figure 4 is a schematic diagram illustrating a system according to an embodiment of the invention;
Figure 5 is a schematic diagram illustrating a system according to another embodiment of the invention;
Figure 6 is a schematic diagram illustrating another embodiment of the invention.

**Detailed Description of the Embodiments**

In embodiments of the invention, transmission powers of different remote radio units are controlled by static power adjustment units inserted at the side of the remote radio units, instead of the conventional method of adjusting baseband output power by using static power level of cell level.

The detailed description of the present invention will be given below with reference to embodiments and the drawings, to make the object, the technical solutions and advantages of the invention better understood.

An embodiment of the invention provides a method for power control. A static power adjustment unit is arranged at the side of remote radio unit, for example, the static power adjustment unit can be integrated in the remote radio unit, or can be arranged independently of the remote radio unit. The method will be discussed in detail as follows:

S1: a baseband processing unit processes a baseband signal and output the baseband signal to the remote radio units in a cell;

S2: after each remote radio unit receives the baseband signal, the static power adjustment unit of the remote radio unit adjusts transmission power of the remote radio unit according to a static power level of the remote radio unit. In other words, the static power adjustment units of the remote radio units adjust the power of the baseband signal according to the static power levels of the remote radio units, before the remote radio units perform intermediate-frequency processing to the adjusted baseband signals and transmit the signals. Thus, the transmission powers of the remote radio units are adjusted.

The static power level of each remote radio unit is the difference between transmission power required by the remote radio unit and power capability of the remote radio unit. In the embodiment of the invention, the power capabilities of the remote radio units are not limited to be the same. Each remote radio unit can transmit signals according to its practical requirement through the adjustment performed by the static power adjustment unit of the remote radio unit.

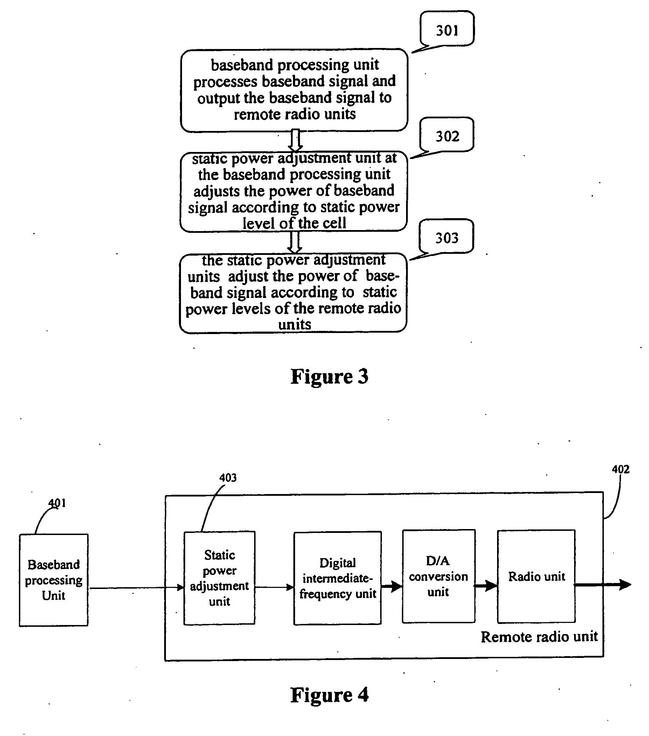

Before the static power adjustment units adjust the powers of the remote radio units, a cell level static power adjustment may be performed at the baseband processing unit. With reference to Figure 3, the method will be described as follows:

Step 301: a baseband processing unit processes a baseband signal and output the baseband signal to the remote radio units in a cell.

Step 302: a static power adjustment unit at the baseband processing unit adjusts the power of the baseband signal according to a static power level of the cell.

Taking into consideration the possible differences between the power capabilities of the remote radio units, the static power level of the cell may be the difference between the maximum transmission power required by the cell and the power capability of a remote radio unit with the highest capability. The power difference un-adjusted at the baseband processing unit may be adjusted on the remote radio units.

Step 303: the static power adjustment unit of each remote radio unit adjusts the power of the received baseband signal according to static power level of the remote radio unit. Because a static power adjustment has been performed at the baseband processing unit in the last step, the static power level of each remote radio unit is the difference between the power of baseband signal resulted from the adjustment of step 302 and the power capability of the remote radio unit. Thus, the static power adjustment of common part of the remote radio units is implemented at the baseband processing unit, and the static power adjustment of differential parts of the remote radio units is implemented at the remote radio units.

In the implementation processes according to embodiments of the invention, after the adjustment performed by the static power adjustment units of the remote radio units, the remote radio units may further perform an intermediate-frequency process to the baseband signal and then transmit the signal with the powers adjusted by the static power adjustment units. However, this should not be considered as a limit to the invention.

In addition, an embodiment of the invention provides a system for power control. As shown in Figure 4, the system includes a baseband processing unit 401, a remote radio unit 402, and a static power adjustment unit 403. In this embodiment, for simplicity, only one remote radio unit 402 is shown, it should be noted that the baseband processing unit 401 may output baseband signal to a plurality of multiple remote radio units at the same time.

The baseband processing unit is adapted to process a baseband signal, for example physical layer processes to a baseband signal, etc. and output the baseband signal to the remote radio unit(s).

The remote radio unit is adapted to receive the baseband signal adjusted by the static power adjustment unit, and perform intermediate-frequency processing to the baseband signal and transmit the signal.

The static power adjustment unit is adapted to receive the baseband signal output by the baseband processing unit, and adjust the power of the baseband signal according to the static power level of the remote radio unit, so as to adjust the transmission power of the remote radio unit.

It should be noted that, in the system according to the embodiment of the invention, the static power adjustment unit is not limited to being integrated in an RRU (in this case, the number of the static power adjustment unit is equal to the number of the remote radio units). Alternatively, the static power adjustment unit may be a separate processing module independent of the RRUs (in this case, a plurality of remote radio units may share one static power adjustment unit). The integration manner of the static power adjustment unit should not be considered as a limit of the invention. Figure 4 shows a scenario when a static power adjustment unit is integrated in an RRU.

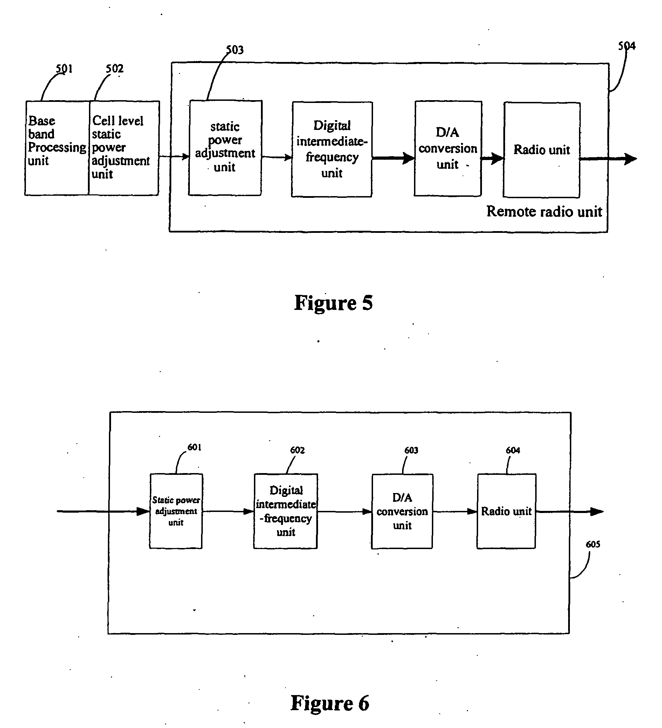

Figure 5 shows another preferred embodiment of the invention. In addition to a static power adjustment unit 503 integrated at the side of a remote radio unit 504, a cell level static power adjustment unit 502 may also be inserted at the side of a baseband processing unit 501. The cell level static power adjustment unit 502 is adapted to adjust the power of baseband signal to be output to each remote radio unit, so that a common control may be performed to the output power before the precise adjustment to be performed by each remote radio unit, in order to improve the precision of the adjustment to be performed by each remote radio unit.

It should be appreciated that, the static power adjustment unit at the side of the remote radio unit may be referred to as the first static power adjustment unit, and the static power adjustment unit at the side of the baseband processing unit may be referred to as the second static power adjustment unit.

In addition, an embodiment of the invention provides a remote radio unit as shown in Figure 6.

In particular, the remote radio unit 605 includes the following units.

A digital intermediate-frequency unit 602, adapted for shaping, filtering and digitally up-converting a downlink spread spectrum signal.

A digital/analog (D/A) conversion unit, adapted for converting the digital signal output by the digital intermediate-frequency unit to an analog signal.

A radio unit, adapted for up-converting the analog signal to a transmission frequency band and for filtering the up-converted analog signal and amplifying the power of the up-converted analog signal.

A static power adjustment unit, adapted for adjusting the power of the baseband signal according to the static power level of the remote radio unit, and for transmitting the adjusted baseband signal to the digital intermediate-frequency unit, so as to adjust the transmission power of the remote radio unit. The static power level of the remote radio unit is the difference between the transmission power required by the remote radio unit and the power capability of the remote radio unit. Alternatively, the static power level of the remote radio unit may be the difference between the power of the adjusted baseband signal and the power capability of the remote radio unit.

It shall be noted that the words "include" or "comprise" herein are to be construed in a logic sense. That is, the static power adjustment unit is arranged at the side of the remote radio unit, and is not necessarily integrated in the remote radio unit. In other words, the static power adjustment unit may be arranged independently of the remote radio unit.

In an embodiment, a remote radio unit is connected to the baseband processing unit, to process the baseband signal output by the baseband processing unit. The remote radio unit may be connected to the baseband processing unit via fibers or cables, etc. The connection manner should not be considered as a limit to the invention.

The above described embodiments are illustrative, and the invention shall not be limited thereto. Various modifications and variations can be made without departing from the scope of the invention as defined by the accompanying claims.

**Claims**

1. A system for controlling power of at least one remote radio unit, comprising:

   a baseband processing unit (401, 501) and
   at least one remote radio unit (402, 504, 605) ; **characterized in that** the system further comprises
   at least one first static power adjustment unit (403, 503, 601),
   wherein the base band processing unit (401, 501) is adapted for processing baseband signal and outputting the processed baseband signal to the first static power adjustment unit (403, 503, 601),

the first static power adjustment unit (403. 503. 601) is adapted for controlling power of the baseband signal output from the baseband processing unit according to static power level of the at least one remote radio unit the remote radio unit (402, 504. 605) is adapted for receiving the baseband signal processed by the first static power adjustment unit performing intermediate-frequency processing to the baseband signal and transmitting the resulting signal:

wherein the static power level of the remote radio unit is a difference between trasmission power required for the remote radio unit and power capability of the remote radio unit.

2. The system according to claim 1, **characterized in that**, the first static power adjustment unit (403, 503, 601) is integrated in the at least one remote radio unit or arranged independent of the at least one remote radio unit.

3. The system according to claim 1 or 2, **characterized in that**, a second static power adjustment unit (502) is further included at side of the baseband processing unit, the second static power adjustment unit (502) being adapted to adjust power of the baseband signal to be output according to static power level of a cell.

4. The system according to claim 3, **characterized in that**, the static power level of the remote radio unit is a difference between output power adjusted by the second static power adjustment unit and power capability of the remote radio unit.

5. The system according to any of claims 1-4, **characterized in that**, the remote radio unit is connected to the baseband processing unit (401, 501) via optical fiber or cable.

6. A remote radio unit (402, 504, 605), comprising:

a digital intermediate-frequency unit (602);
a digital/analog conversion unit (603);
a radio-frequency unit (604),
**characterized in that**, the remote radio unit further comprises a static power adjustment unit (601), adapted for power control according to static power level of the remote radio-frequency unit,
wherein the static power level of the remote radio unit is a difference between transmission power required for the remote radio unit and power capability of the remote radio unit.

7. The remote radio unit according to claim 6, **characterized in that**,
the static power level of the remote radio unit is a difference between transmission power required by the remote radio unit and power capability of the remote radio unit: or
a difference between output power of a baseband unit and power capability of the remote radio unit.

8. A method for controlling power of a remote radio unit (402. 504, 605), comprising:

obtaining a static power level of the remote radio unit (402, 504, 605);
controlling output power of a baseband processing unit (401, 501) according to the static power level of the remote radio unit, so that transmission power of the remote radio unit is controlled.
wherein the static power level of the remote radio unit is a difference between transmission power required for the remote radio unit and power capability of the remote radio unit.

9. The method according to claim 8, **characterized in that** before controlling output power of a baseband processing unit according to the static power level of the remote radio unit, further comprising: controlling the output power according to static power level of a cell.

10. The method according to claim 9, **characterized in that**, the static power level of the remote radio unit is a difference between power adjusted based on the static power level of a cell and power capability of the remote radio unit.

11. The method according to claim 9, **characterized in that**, the static power level of the cell is a difference between maximum transmission power required by the cell and power capability of a remote radio unit with a highest power capability.

**Patentansprüche**

1. System zum Regeln der Leistung mindestens einer entfernten Funkeinheit, umfassend:

   eine Basisband-Verarbeitungseinheit (401, 501) und
   mindestens eine entfernte Funkeinheit (402, 504, 605), **dadurch gekennzeichnet, dass** das System ferner Folgendes umfasst:

   mindestens eine erste Einstelleinheit (403, 503, 601) für die statische Leistung,
   wobei die Basisband-Verarbeitungseinheit (401, 501) dafür ausgelegt ist, ein Basisbandsignal zu verarbeiten und das verarbeitete Basisbandsignal an die erste Einstelleinheit (403, 503, 601) für die statische Leistung auszugeben;
   die erste Einstelleinheit (403, 503, 601) für die statische Leistung dafür ausgelegt ist, die Leistung des von der Basisband-Verarbeitungseinheit ausgegebenen Basisbandsignals gemäß dem statischen Leistungspegel der mindestens einen entfernten Funkeinheit zu regeln,
   die entfernte Funkeinheit (402, 504, 605) dafür ausgelegt ist, das durch die erste Einstelleinheit für die statische Leistung verarbeitete Basisbandsignal zu empfangen, Zwischenfrequenzverarbeitung an dem Basisbandsignal auszuführen und das resultierende Signal zu senden;
   wobei der statische Leistungspegel der entfernten Funkeinheit eine Differenz zwischen für die entfernte Funkeinheit erforderlicher Sendeleistung und Leistungsfähigkeit der entfernten Funkeinheit ist.

2. System nach Anspruch 1, **dadurch gekennzeichnet, dass** die erste Einstelleinheit (403, 503, 601) für die statische Leistung in die mindestens eine entfernte Funkeinheit integriert oder unabhängig von der mindestens einen entfernten Funkeinheit angeordnet ist.

3. System nach Anspruch 1 oder 2, **dadurch gekennzeichnet, dass** ferner auf der Seite der Basisband-Verarbeitungseinheit eine zweite Einstelleinheit (502) für die statische Leistung vorgesehen ist, wobei die zweite Einstelleinheit (502) für die statische Leistung dafür ausgelegt ist, die Leistung des auszugebenden Basisbandsignals gemäß dem statischen Leistungspegel einer Zelle einzustellen.

4. System nach Anspruch 3, **dadurch gekennzeichnet, dass** der statische Leistungspegel der entfernten Funkeinheit eine Differenz zwischen durch die zweite Einstelleinheit für die statische Leistung eingestellter Ausgangsleistung und Leistungsfähigkeit der entfernten Funkeinheit ist.

5. System nach einem der Ansprüche 1 bis 4, **dadurch gekennzeichnet, dass** die entfernte Funkeinheit über optische Faser oder Kabel mit der Basisband-Verarbeitungseinheit (401, 501) verbunden ist.

6. Entfernte Funkeinheit (402, 504, 605), umfassend:

   eine digitale Zwischenfrequenzeinheit (602);
   eine Digital-Analog-Umsetzungseinheit (603);
   eine Hochfrequenzeinheit (604);
   **dadurch gekennzeichnet, dass** die entfernte Funkeinheit ferner eine Einstelleinheit (601) für die statische Leistung umfasst, die für Leistungsregelung gemäß dem statischen Leistungspegel der entfernten Hochfrequenzeinheit ausgelegt ist,
   wobei der statische Leistungspegel der entfernten Funkeinheit eine Differenz zwischen für die entfernte Funkeinheit erforderlicher Sendeleistung und Leistungsfähigkeit der entfernten Funkeinheit ist.

7. Entfernte Funkeinheit nach Anspruch 6, **dadurch gekennzeichnet, dass**
   der statische Leistungspegel der entfernten Funkeinheit eine Differenz zwischen von der entfernten Funkeinheit erforderter Sendeleistung und Leistungsfähigkeit der entfernten Funkeinheit oder
   eine Differenz zwischen Ausgangsleistung einer Basisbandeinheit und Leistungsfähigkeit der entfernten Funkeinheit ist.

8. Verfahren zur Regelung der Leistung einer entfernten Funkeinheit (402, 504, 605), mit den folgenden Schritten:

   Erhalten eines statischen Leistungspegels der entfernten Funkeinheit (402, 504, 605);
   Regeln der Ausgangsleistung einer Basisband-Verarbeitungseinheit (401, 501) gemäß dem statischen Leistungspegel der entfernten Funkeinheit dergestalt, dass die Sendeleistung der entfernten Funkeinheit geregelt wird,

wobei der statische Leistungspegel der entfernten Funkeinheit eine Differenz zwischen für die entfernte Funkeinheit erforderlicher Sendeleistung und Leistungsfähigkeit der entfernten Funkeinheit ist.

**9.** Verfahren nach Anspruch 8, **dadurch gekennzeichnet, dass** es vor dem Regeln der Ausgangsleistung einer Basisband-Verarbeitungseinheit gemäß dem statischen Leistungspegel der entfernten Funkeinheit ferner Folgendes umfasst: Regeln der Ausgangsleistung gemäß dem statischen Leistungspegel einer Zelle.

**10.** Verfahren nach Anspruch 9, **dadurch gekennzeichnet, dass** der statische Leistungspegel der entfernten Funkeinheit eine Differenz zwischen auf der Basis des statischen Leistungspegels einer Zelle eingestellter Leistung und Leistungsfähigkeit der entfernten Funkeinheit ist.

**11.** Verfahren nach Anspruch 9, **dadurch gekennzeichnet, dass** der statische Leistungspegel der Zelle eine Differenz zwischen von der Zelle erforderter maximaler Sendeleistung und Leistungsfähigkeit einer entfernten Funkeinheit mit einer höchsten Leistungsfähigkeit ist.

## Revendications

**1.** Système de commande de la puissance d'au moins une unité radio distante, comprenant :

une unité de traitement en bande de base (401, 501) et
au moins une unité radio distante (402, 504, 605), **caractérisé en ce que** le système comprend en outre
au moins une première unité de réglage de puissance statique (403, 503, 601),
dans lequel l'unité de traitement en bande de base (401, 501) est adaptée pour traiter un signal en bande de base et produire en sortie le signal en bande de base traité vers la première unité de réglage de puissance statique (403, 503, 601),
la première unité de réglage de puissance statique (403, 503, 601) est adaptée pour commander la puissance du signal en bande de base produit en sortie par l'unité de traitement en bande de base en fonction du niveau de puissance statique de l'au moins une unité radio distante,
l'unité radio distante (402, 504, 605) est adaptée pour recevoir le signal en bande de base traité par la première unité de réglage de puissance statique, exécuter un traitement de fréquence intermédiaire sur le signal en bande de base et transmettre le signal résultant ;
dans lequel le niveau de puissance statique de l'unité radio distante est une différence entre la puissance d'émission requise pour l'unité radio distante et la capabilité de puissance de l'unité radio distante.

**2.** Système selon la revendication 1, **caractérisé en ce que** la première unité de réglage de puissance statique (403, 503, 601) est intégrée dans l'au moins une unité radio distante ou agencée indépendamment de l'au moins une unité radio distante.

**3.** Système selon la revendication 1 ou 2, **caractérisé en ce qu'**une seconde unité de réglage de puissance statique (502) est en outre incluse à côté de l'unité de traitement en bande de base, la seconde unité de réglage de puissance statique (502) étant adaptée pour régler la puissance du signal en bande de base à produire en sortie en fonction du niveau de puissance statique d'une cellule.

**4.** Système selon la revendication 3, **caractérisé en ce que** le niveau de puissance statique de l'unité radio distante est une différence entre la puissance de sortie réglée par la seconde unité de réglage de puissance statique et la capabilité de puissance de l'unité radio distante.

**5.** Système selon l'une quelconque des revendications 1 à 4, **caractérisé en ce que** l'unité radio distante est connectée à l'unité de traitement en bande de base (401, 501) par l'intermédiaire d'une fibre optique ou d'un câble.

**6.** Unité radio distante (402, 504, 605), comprenant :

une unité de fréquence intermédiaire numérique (602) ;
une unité de conversion numérique/analogique (603) ;
une unité de fréquences radioélectriques (604) ;

**caractérisée en ce que** l'unité radio distante comprend en outre une unité de réglage de puissance statique (601), adaptée pour la commande de puissance en fonction du niveau de puissance statique de l'unité de fréquences radioélectriques distante,

dans laquelle le niveau de puissance statique de l'unité radio distante est une différence entre la puissance d'émission requise pour l'unité radio distante et la capabilité de puissance de l'unité radio distante.

7. Unité radio distante selon la revendication 6, **caractérisée en ce que** le niveau de puissance statique de l'unité radio distante est une différence entre la puissance d'émission requise par l'unité radio distante et la capabilité de puissance de l'unité radio distante ; ou

une différence entre la puissance de sortie d'une unité en bande de base et la capabilité de puissance de l'unité radio distante.

8. Procédé de commande de la puissance d'une unité radio distante (402, 504, 605), comprenant :

l'obtention d'un niveau de puissance statique de l'unité radio distante (402, 504, 605) ;
la commande de la puissance de sortie d'une unité de traitement en bande de base (401, 501) en fonction du niveau de puissance statique de l'unité radio distante, de façon à commander la puissance d'émission de l'unité radio distante,
dans lequel le niveau de puissance statique de l'unité radio distante est une différence entre la puissance d'émission requise pour l'unité radio distante et la capabilité de puissance de l'unité radio distante.

9. Procédé selon la revendication 8, **caractérisé en ce qu'**avant la commande de la puissance de sortie d'une unité de traitement en bande de base en fonction du niveau de puissance statique de l'unité radio distante, il comprend en outre : la commande de la puissance de sortie en fonction du niveau de puissance statique d'une cellule.

10. Procédé selon la revendication 9, **caractérisé en ce que** le niveau de puissance statique de l'unité radio distante est une différence entre la puissance réglée en fonction du niveau de puissance statique d'une cellule et la capabilité de puissance de l'unité radio distante.

11. Procédé selon la revendication 9, **caractérisé en ce que** le niveau de puissance statique de la cellule est une différence entre la puissance d'émission maximum requise par la cellule et la capabilité de puissance d'une unité radio distante ayant la plus haute capabilité de puissance.

**Figure 1**

**Figure 2**

EP 1 883 167 B1

**Figure 3**

**Figure 4**

11

501  502

503

504

| Base band Processing unit | Cell level static power adjustment unit |
|---|---|

| static power adjustment unit | Digital intermediate- frequency unit | D/A conversion unit | Radio unit |
|---|---|---|---|

Remote radio unit

## Figure 5

601

602

603

604

| Static power adjustment unit | Digital intermediate -frequency unit | D/A conversion unit | Radio unit |
|---|---|---|---|

605

## Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200610061839
- WO 03075488 A1